# EUROPEAN PATENT APPLICATION

(11) **EP 0 967 821 A2**
(43) Date of publication of application: **29.12.1999**
(21) Application number: 99104882.8
(22) Date of filing: 11.03.1999
(51) Int. Cl.: H04Q 11/04

(54) **Silence detection and suppression in voice trunking applications over an ATM network**

(30) Priority: 25.06.1998 US 90687 P; 02.10.1998 US 165186
(71) Applicant: NEC CORPORATION, Tokyo (JP)
(72) Inventor: Dighe, Rajiv c/o NEC USA, Inc., Princeton, New Jersey 08540 (US); Thirumalai, Vasanthi c/o NEC USA, Inc., Princeton, New Jersey 08540 (US)
(74) Representative: Patentanwälte Dipl.-Ing. R. Splanemann Dr. B. Reitzner Dipl.-Ing. K. Baronetzky

(57) **Abstract**

A method of suppressing silence in an ATM network is provided. The present invention models silence at an ingress multiplexer; describes silence in terms of predetermined silence descriptors; transmits these descriptors across the network. The descriptors are received and a function of the descriptors is played out at the egress multiplexer. OAM cells are used to convey the beginning and end of silence. Another aspect of the present invention is an ATM network that incorporates silence suppression. The ATM network of the present invention conveys the beginning and end of silence using silence descriptors. Silence is played out at the egress multiplexer based on these descriptors.

## Description

### I. DESCRIPTION OF THE INVENTION

This application claims priority from co-pending U.S. Provisional Patent Application Serial No. 60/090,687 filed on June 25, 1998.

### IA. FIELD OF THE INVENTION

This invention relates to Asynchronous Transfer Mode (ATM) networks. Specifically, it deals with a method for transmitting digital voice samples from one switch to another with silence suppression. In particular, the present invention specifies an arrangement for an ingress multiplexer of an ATM network to suppress the silence periods and play them back at the egress multiplexer of the ATM network. The present invention is embodied in methods for transmitting voice and silence in an ATM network, in an OAM cell system for use in suppressing silence and in an ATM network system that incorporates silence suppression.

### IB. BACKGROUND

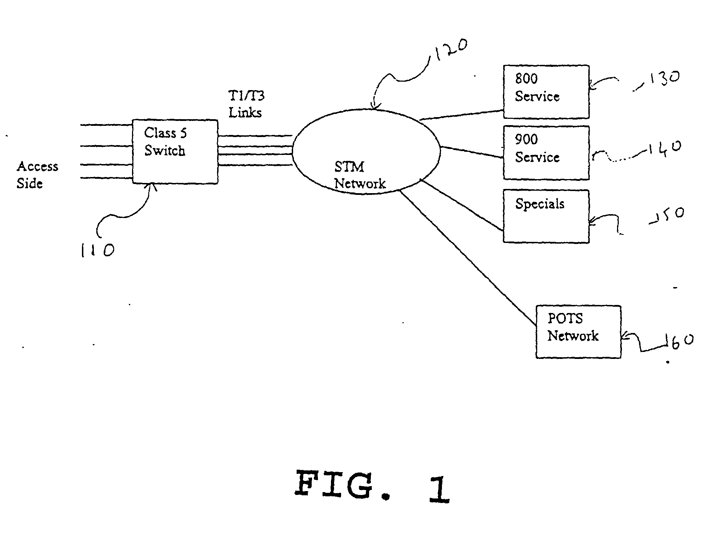

Circuit-switched Public Switched Telephone Networks (PSTN) are increasingly being replaced by Asynchronous Transfer Mode (ATM) backbone. A conventional network system is shown in FIG.1. In such a conventional network system based on circuit-switched Synchronous Transfer Mode (STM) technology, class 5 switches 110 are used to route and separate various services such as 800 services, 900 services, special services often carrying Internet traffic, and Plain Old Telephone Services (POTS) ; boxes 130, 140, 150 and 160 respectively. This network is a collection of class 5 switches and Network Service Points (NSPs) forming part of an STM network 120 interconnected with DS1/DS3 (T1/T3) links.

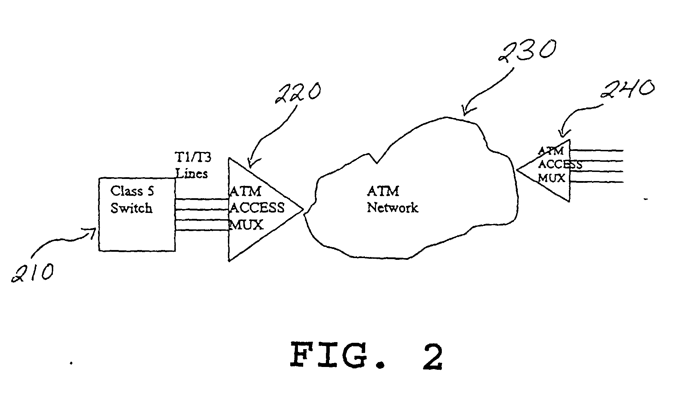

Programming the network entities and the corresponding Operations Support Systems (OSS), in the conventional PSTN system, is very expensive and computationally intensive. To reduce operating costs, public carriers are increasingly moving to an ATM backbone to carry all these services on one unified transport network (with only one OSS). Such a migration is illustrated in FIG. 2. Class 5 switches 210 are connected using DS1/DS3 (T1/T3) lines to an ATM access multiplexer 220, which accesses an ATM network 230.

In this migration scenario, the requirements on the ATM network in general and the ATM access multiplexer in particular include the efficient transport of a large number of voice streams (PCM and ADPCM based) on the ATM network. Each OC-3 link on the ATM trunk can transport as many as 2000 voice channels without any compression. Because ATM uses a form of labeled multiplexing, it has properties that are inherently suitable for some conventional forms of Digital Speech Interpolation (DSI) including silence suppression and playback. Furthermore, because a fat pipe to multiplex the voice channels is being considered by practitioners, statistical multiplexing using silence suppression is a very effective solution for increasing the bandwidth efficiency. Such a solution also avoids using conventional speech compression techniques that involve transcoding and other complexities. Mapping voice streams into ATM cells typically involves the use of an ATM Adaptation Layer (AAL) to segment voice samples, to be shipped across the ATM cloud and assembled back together. Three different AALs are being standardized by the ITU and the ATM Forum that are suitable for use in VTOA applications:
1) AAL-1 consists of a 47-byte payload combined with a one byte AAL overhead. It is mostly used for voice applications that map one voice channel onto an ATM VC, though it also can map an entire T1 payload onto an ATM VC using Circuit Emulation Services (CES) - specified by the ITU and the ATM Forum. AAL-1 has support for clock recovery and synchronization and is considered suitable for Constant Bit Rate (CBR) services.
2) AAL-5 is the most popular adaptation layer optimized for data delivery. It supports PDU's of up to 64 kbytes and relies on an EOM bit in the ATM header to delineate AAL-5 PDUs. AAL-5 protects data on the entire PDU using CRC-32. Most early ATM applications use AAL-5 due to the ready availability of AAL-5 chips.
3) AAL-2 is a new variable bit rate AAL currently being standardized by the ITU that supports sub-VC multiplexing. See ITU-T I.TRUNK -AAL-2 SSCS for Trunking. Multiple low bit rate channels can be multiplexed to an ATM VC using AAL-2. Each channel inside an AAL-2 VC can produce variable length packets. AAL-2 supports speech compression and also silence suppression in its specification.

### IB.1 Conventional techniques of silence suppression

### IB.1(a) AAL-1 solution

Current dynamic bandwidth utilization scheme (DBCES) defined by the ITU and the ATM Forum for AAL-1 suppresses only inactive channels and does not provide a means to suppress silence within a voice channel. See "Dynamic Bandwidth Utilization in 64 kb/s time slot trunking over ATM using CES," ATM Forum VTOA working group draft. In this solution DBCES uses an NxDS0 solution for voice suppression. This conventional technique is based on the premise that entire T1 frames are shipped across the ATM network and if slots in the frame are not active, the egress multiplxer is notified of it using a separate signaling channel carved out of the AAL-1 payload.

Four different structures are defined to signal the inactivity/activity of DS0's in a DS-1. Currently DBCES is used to signal active/inactive channels in a DS-1, but it is not used for silence suppression. Even if DBCES were to be used for silence suppression, this solution suffers from two disadvantages:
1) Individual DS0's inside a DS-1 cannot be unbundled and routed to different destinations inside the ATM network.
2) The silence code being played out is not customized to each voice channel. For playout at the egress, it is important that the silence code being played out be customized to each voice channel for perceptual quality reasons. For example the background noise in a mall is different from that in an office or a car. The above solution does not allow dynamic measurement of background noise to be played out at the receiver on a per channel basis and may leave the individuals in the call feel as though they were being cut off. The idle code detector of the present invention can be customized on a per channel basis enabling data applications to have a different idle code detector from voice. Further, there is no onus on the class 5 switch to bundle different services on different T1 links.

### IB.1(b) AAL-2 solution

In the conventional AAL-2 solution, the ATM Forum/ITU has defined a Service Specific Convergence Sublayer (SSCS) for trunking. The SSCS defines packet formats and procedures for encoding various information types over a single ATM VC. The SSCS accommodates known techniques for audio encoding, silence compression and fax demodulation. In this scheme, depending on the audio coding scheme, a fixed length segment is sent periodically. The segment is either active voice or silence. The silence is indicated by a non-zero value of the SID field in the convergence sub-layer. Once a non-zero SID is transmitted the receiver assumes silence suppression is ON and plays the fill out based on the coding algorithm and the SID.

The AAL-2 solution, unlike the present invention, uses the convergence sublayer to convey the SSF function. The prescribed ATM Forum/ITU solution places more processing onus on the demultiplexing unit as the coding and the statistical multiplexing functions are all combined in one SSCS while the present invention separates the two functions. The lack of an explicit SSF ON flag also puts an additional onus on the receiver to detect idle subchannels implicitly based on a field hidden in the SSCS layer. Also there are no hand shake mechanisms to ensure that silence notification is received reliably in this scheme. The SSCS for AAL-2 achieves bandwidth utilization by its own silence suppression scheme. See ITU-T I.TRUNK -AAL-2 SSCS for Trunking.

While the AAL-1 solution fails to suppress silence in active channels, the AAL-2 solution is closely tied to AAL-2 protocol. Further, because of the way standards evolve, a skilled artisan will realize that silence suppression is a feature that can be accommodated only using AAL-2. However, for the migration of existing PSTN to the ATM backbone, AAL-2 is not viewed favorably by practitioners. Most operators consider using AAL-1 or AAL-5 as the means of transporting voice samples and not AAL-2. The reasons for that are:
- The primary application scenario for AAL-2 trunking is low-bit rate voice while the primary application, noted above, that is of our interest is 64 Kb/s PCM voice.
- AAL-2 with its sub-VC multiplexing mode is considered too complicated and its serious deployment now is premature. Moreover, it is too computationally intensive.
- The entire ATM universe was predicated on the ATM VC as being the least common multiplexing unit and an entire infrastructure of hardware and software is in place based on this premise. The sub-VC multiplexing feature of AAL-2 does not have a corresponding mature infrastructure (signaling + MIBs etc.).
- AAL-2 is based on improving bandwidth efficiency at the expense of extra processing power that works on low bit rate applications but may not be feasible for the described network application where thousands of channels need to be multiplexed onto one uplink trunk.
- AAL-1 and AAL-5 are both well developed in the art (both in terms of chipsets as well as a software infrastructure) and suitable for the present network application. It should be noted that in the present network application, service consolidation is a primary objective; as opposed to maximizing bandwidth efficiency at the expense of additional processing complexity.
- The present network application behoves simple bandwidth saving schemes such as silence suppression due to the enormous number of voice channels that are being multiplexed on the ATM backbone without needing voice compression as proposed by AAL-2. Simple calculations indicate that getting statistical multiplexing gains of 2:1 to 3:1 may be possible (4000-6000 voice channels on an OC-3 link)by simple suppression schemes over AAL-1 or AAL-5.

It can be easily determined that by freeing the silence suppression scheme from the AAL, a more adaptive and generic scheme can be derived. Such a scheme allows the service provider the ability to tradeoff bandwidth savings with protocol processing overheads without having to rely on an all or nothing approach which combines silence suppression and AAL-2.

To reduce costs and to make the ATM transmission more efficient, the suppression of silence is necessary. Conventional ATM based on currently available AAL-1 or AAL-5 systems does not provide adequate silence suppression. Furthermore the silence suppression and playout scheme should address at least the following requirements:
- For effective SD/SS (Silence Detection and Silence Suppression) a reliable silence notification mechanism to mark the beginning and the end of the silence period is required. It should be noted that the AAL-2 approach does not guarantee such a notification.
- Temporalities between silence periods and talk spurts needs to be maintained in the network.
- SS Control Cells have to be in the same data path as the Data Cells.
- Embedded Channel Signaling is required.
- Playout has to be realistic- the same playout cannot be used for all channels in a trunk group. For example, background noise in a mall is normally different from that in an office.
- Noise model should be driven by actual measurements of idle code on a per channel basis.
- The strategy has to be robust in the sense that the beginning of each epoch (talk and silence) should be signaled clearly and acknowledged.
- Moving from OFF to ON needs to be more critical than moving from ON to OFF.
- Error protection is needed on the Signaling Cell.
- Simple tradeoffs should be possible between bandwidth efficiency and extra processing.
- The scheme should lend itself to extensions to other traffic types- such as idle flag suppression for HDLC-based traffic.
- Moreover the scheme should be essentially AAL independent working on any AAL.

### II. SUMMARY OF THE INVENTION

It is an objective of the present invention to provide a method for suppressing silence in an ATM network satisfying these objectives. It is a further objective of this invention to provide a method of transmitting voice with silence suppression. It is yet another objective of the present invention to use an OAM cell for transmitting silence notification. It is yet another objective of this invention to provide this notification reliably. Still another objective of the present invention is to provide an ATM network with silence suppression without the above-mentioned problems.

In order to meet the above objectives there is provided a method of transmitting silence in an ATM network, wherein a specific silence representation model known to ingress multiplexer and egress multiplexer is used, said method comprising: modeling silence at the ingress multiplexer; describing silence based on the model using silence descriptors; transmitting the silence descriptors using a medium; receiving silence descriptors at the egress multiplexer; and recreating silence using the silence descriptors.

Preferably, a decision to suppress or not to suppress is based on streams with known encoding formats. Preferably, the streams are selected from a group consisting of digital PCM, ADPCM, CELP, PLC and HDLC.

Further improvements include the method of transmitting silence wherein OAM cells are used to transmit silence descriptors. Still further improvements include the method of transmitting silence wherein the silence descriptors can be changed dynamically, said change being conveyed to egress multiplexer by dynamically refreshing the medium.

Another aspect of the present invention is a method of transmitting voice in an ATM network with silence suppression, said method comprising: preparing a start notification and a corresponding end notification on detecting an epoch of silence in a speech sample; converting speech samples without silence into ATM cells at an ingress multiplexer; appending a 5-byte ATM header to the ATM cells; sending the ATM cells; sending the ATM cells, said start notification and corresponding end notification at appropriate times; and recreating the voice sample at an egress multiplexer based on the ATM cells, said start notification and corresponding end notification.

Preferably, the start and corresponding end notification are prepared using OAM cells.

Further improvements include the method of transmitting voice with silence suppression wherein in an OAM cell a silence suppression flag is set to ON to indicate silence, the ingress multiplexer transmits the last valid ATM cell before transmitting an OAM cell with silence suppression flag set to ON on a VC and then marks the VC as inactive.

Preferably, all low energy PCM is designated as silence, silence descriptors are transmitted representing silence, and a function of the silence descriptor is played out at the egress multiplexer.

Preferably, for an AAL-2 a subchannel ID in the SSF OAM cell is added to indicate a subchannel to facilitate demultiplexing at the egress multiplexer.

Preferably, idle code suppression is provided by removing HDLC flags. Preferably, idle code suppression is also provided by removing Fax idle codes.

Further improvements include the method of transmitting voice with silence suppression wherein error recovery is provided by sending OAM cells periodically.

Preferably, error recovery is provided by having a 2-way OAM handshake protocol that guarantees that an OAM cell has been received.

Preferably, the OAM cell is an end to end OAM cell corresponding to payload type indicator of 101.

Preferably, on selecting a non idle flag an OAM cell with a silence suppression flag set to OFF is transmitted followed by marking the VC as active.

Yet another aspect of the present invention is an OAM cell for use in suppressing silence in an ATM network, said cell comprising a silence suppression function. Preferably, the OAM cell carries a sub-channel ID for an AAL-2 subchannel. Preferably, the OAM cell structure has a sequence number field for an AAL-1 subchannel, said sequence number being a last sent out SSCS-PDU, and wherein a receiver ensures that the SSCS-PDU is received in full and played out before silence is played when said silence is triggered by an OAM cell carrying the sequence number.

Still another aspect of the present invention is an ATM network with silence suppression wherein silence suppression is carried out at an ingress multiplexer by multiplexing silence start and silence end notifications at beginning and end of silence, wherein only voice data is converted into ATM cells and playing out silence and voice at appropriate instances at egress multiplexer. Preferably, the notifications are done using an OAM cell.

Further improvements include the ATM network wherein all low energy PCM is designated as silence. Preferably, an AAL-2 subchannel ID is added to indicate a subchannel to facilitate demultiplexing at the egress multiplexer. Preferably, idle code suppression is provided by removing HDLC flag. Preferably, idle code suppression is also provided by removing Fax idle codes.

Further improvements include the ATM network wherein error recovery is provided by sending OAM cells periodically. Still further improvements include the ATM network wherein error recovery is provided by having a 2-way OAM handshake protocol that guarantees that an OAM cell has been received. Preferably, the OAM cell is an end to end OAM cell corresponding to payload type indicator of 101.

### III. LIST OF FIGURES

The above objectives and advantages of the present invention will become more apparent by describing in detail preferred embodiments thereof with reference to the attached drawings in which:

FIG. 1 shows a conventional Synchronous Transfer Mode (STM) Network.

FIG. 2 shows a scenario depicting a migration to Asynchronous Transfer Mode (ATM).

FIG. 3 shows an arrangement for an Ingress Access Multiplexer to discard Idle Code.

FIG. 4. shows an arrangement for an Ingress Access Multiplexer for Low Energy Suppression.

FIG. 5 shows an explicit OAM cell handshake to ensure robust operation.

FIG. 6 shows an SSF OAM Cell Format.

### IV. DETAILED DESCRIPTION OF THE INVENTION

The present invention relates to the transportation of digital voice samples (PCM) from one class 5 switch to another through an ATM network while incorporating silence detection and suppression to achieve better compression, across the ATM network, for voice calls. In particular this invention specifies an arrangement at the ingress ATM access multiplexer to suppress the silence periods and replay them back at the egress ATM access multiplexer using a combination of ATM technology and PCM technology.

According to the present invention, silence is transmitted in an ATM network using a model that represents silence. Such a model is known to, and can be recognized by, both the ingress and egress multiplexers used in the network. Silence is detected at the ingress multiplexer and modeled using the known model. Silence descriptors are used by the model to describe the silence detected. These silence descriptors are then transmitted across the network media to the egress multiplexer. The egress multiplexer, which knows the model can recreate the silence using the descriptors. In such a case, a function of the silence descriptors that are received at the egress multiplexer is played out as silence. Preferably, OAM cells are used to transmit these descriptors. If the values produced by the model used to represent silence changes, then the OAM cells are refreshed to incorporate such changes.

### IV A SILENCE SUPPRESSION USING THE PRESENT INVENTION

Key features of the present invention are described as under:

### IV A.1 Observing encoding formats

A key aspect of this invention is the detection of silence in a voice stream. It is to be noted that, voice streams entering the access multiplexer are streams with known encoding formats. Examples of such formats include digital PCM or ADPCM streams with known idle codes and low energy codes (this is based on the well-known A-law and µ-law PCM rules). Unlike prior art techniques that perform digital speech interpolation on analog samples, the present invention performs silence detection by merely observing encoding formats (for example PCM, ADPCM, CELP, PLC and HDLC samples). Based on the samples of encoding formats, a decision to suppress (or not to suppress) a segment of the voice stream is made.

Importantly, the coding style of each channel is known apriori through call setup or provisioning. Based on this known coding style, a preferred silence filter is constructed. Silence is measured and the silence descriptor is dynamically updated, while ensuring that the egress multiplexer is notified about it. Such a technique ensures realistic playout of silence.

### IV A. 2 Conversion to ATM cells

The speech samples are converted into ATM cells at the ingress access multiplexer. Preferably, a well known ATM Adaptation Layer (AAL) is used; namely AAL-1, AAL-2 or AAL-5, for converting speech samples to ATM cells. AAL-1 takes 47 bytes of data and adds an one byte AAL header to form the payload of an ATM cell (48 bytes). AAL-2 multiplexes multiple voice channels onto the same ATM VC.

### IV A. 3 Appending ATM headers

After ATM cells are created, the technique of the present invention involves appending 5-byte ATM headers to the ATM cells followed by transmitting them across the ATM network. Note that in the preferred embodiment using AAL-1, each voice channel is assigned its own unique ATM virtual circuit while in the preferred embodiment using AAL-2 an ATM VC is shared between many voice subchannels. The ATM cells are transported across the network using ATM cell multiplexing and transport technology.

Note however that, unlike STM networks, ATM introduces a variable queuing delay inside the network; therefore cells on a given VC may arrive jittered and bunched up or spread out. This introduces a problem at the egress multiplexer in playing the voice samples out.

Two well-known playout strategies are used in ATM networks. If the underlying network is a synchronous network such as SONET networks, a technique called Synchronous Residual Time Stamp (SRTS) is used. Otherwise, an adaptive clock strategy is used. In the latter case, the egress multiplexer plays the voice samples out based on a clock that adapts to a buffer fill. It starts playing the voice samples out based on a threshold in the buffer. The threshold is chosen based on the probability of a buffer being underflow or overflow. Such a probability is determined apriori for the underlying ATM network. The adaptive clock reads the data out slower or faster depending on whether the buffer is underflowing or overflowing. The present invention is independent of the clock recovery scheme and will work on both the techniques.

### IV A. 4 Playing out at the egress multiplexer

At the egress multiplexer, the original voice bytes are played out again. Because of the variable delay through the ATM network, merely throwing silence codes at the ingress multiplexer and playing it out at the egress multiplexer (with silence codes being used to fill in whenever the buffers are empty) will not work. Some notification for the beginning of the silence period to the end of the silence period needs to be sent from the ingress multiplexer access node to the egress multiplexer access node. Moreover, the notification needs to satisfy certain properties, namely:
- The notification has to be on a per voice channel basis.
- The notification marker has to be in-band, that is, it needs to be processed sequentially with the data cells to ensure the correct playback.

### IV A. 5 Cell notification using special control cells

For the ATM network, a special control cell is used to perform the notification. This special control cell is called an OAM cell and has been defined in the ATM standard to perform in-band control on a per VC basis. In the 5-byte ATM header, there is a 3 bit Payload Type Indicator (PTI). The encoding for the PTI fields are as follows: PT1=000 to 011=> User data cells, PTI=101=> F5 end to end OAM cell, PTI=100=> F5 segment by segment OAM cell, PTI=1 10 => Resource Management Cell and PTI=111 => For Future Use.

For the present invention which is end to end, an F5 end to end OAM cell (PTI= 101) cell is used. The first 6 bits of the OAM Cell Payload is called the Function Id bits (FID). The current functions defined in the ATM standards for end to end OAM cells are:
- Loopback test
- Performance monitoring cells (return statistics of cell losses, delay etc on a per VC basis)

Note that there are plenty of code points left unused for use in future applications in the FID field.

### IV A. 6 Use of F5 ATM cells

In the present invention a new Function for this type of F5 OAM cell (as we can see there are plenty of code points available inside the FID) is specified. The function is called Silence Suppression Function (SSF). Two kinds of messages are defined:
1)SSF ON
2)SSF OFF

### IV A. 7 Use of OAM messages

Inside the OAM message, a sub-channel ID for an AAL-2 subchannel can also be carried as described further in the examples.

### IV A. 8 Silence suppression for Voice

Silence suppression and recovery across the ATM network for voice can also be performed using the present invention.

### IV B. EXAMPLES

The present invention is illustrated using a few examples. These examples show preferred embodiments that use the methods of silence suppression of the present invention. The examples also describe in detail preferred embodiments of ATM networks that incorporate silence suppression techniques of the present invention. They also describe OAM cells used for transmitting silence according to the present invention.

### IV B. 1 Idle code suppression using AAL-1 for voice trunking applications.

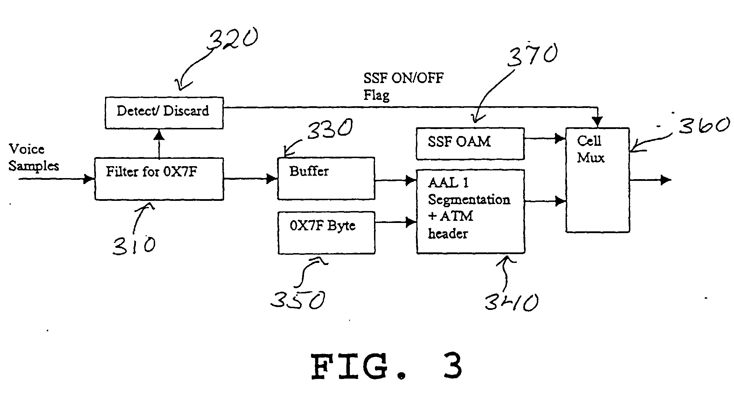

In this example, the PCM idle code (OX7F) is suppressed across an ATM network and played back at the other end. At the egress multiplexer, ATM cells are created out of PCM digital voice samples on a per channel basis. The arrangement at the ingress multiplexer accesses node is shown in FIG. 3.

Voice samples on a per channel basis are sent through a filter 310 which searches for the idle code detector. When a well known idle code is detected, the SSF ON flag is set at the cell multiplexer 360. Cell multiplexer can also be set based on getting a continuous sequence of N idle codes (where N is the programmable threshold for triggering a state change). The value of N is decided based on the optimal and efficient use of the network. Further idle codes are discarded at the filter in 320 and not sent to the Buffer 330 until a nonidle code or a sequence of M nonidle codes are detected. The value of M is decided based on the optimal and efficient use of the network. The AAL-1 segmentation engine 340 takes 47 bytes of data from the buffer and make valid ATM cells out of it. If the buffer is empty, it uses the OX7F byte register 350 to pad the remaining bytes on the ATM cell before presenting it to the cell multiplexer 360. If the SSF ON flag is set, the cell multiplexer 360 transmits the last valid ATM cell from the AAL-1 Engine before transmitting an SSF ON OAM cell from SSF OAM register 370. It marks this VC as being in an IDLE state and will not schedule this VC for future transmission.

When the filter detects a nonidle Flag, it sets the SSF ON/OFF flag to OFF and the cell multiplexer now marks the VC as ACTIVE. It sends an SSF OFF OAM cell to the egress multiplexer and then starts transmission of valid AAL-1 cells on that VC. This continues until the SSF ON/OFF flag toggles again.

At the egress multiplexer access node, the reverse operation takes place. ATM cells are placed in a playout buffer and played out based on the playout strategy appropriate for the network (either SRTS or adaptive clock), the only difference is that SSF ON/OFF messages triggers the buffer from which to playout. If the state of the VC is IDLE, the egress multiplexer plays out OX7F and if the state is ACTIVE, it plays out bytes from the actual playout buffer. Note that the actual playout strategy (namely when to play out the bytes from the actual playout buffer) is independent of this scheme. The inband nature of this ON/OFF control guarantees temporality of the playout sequence.

### IV B.2 Low Energy Suppression of Voice Samples using AAL-1 and SSF.

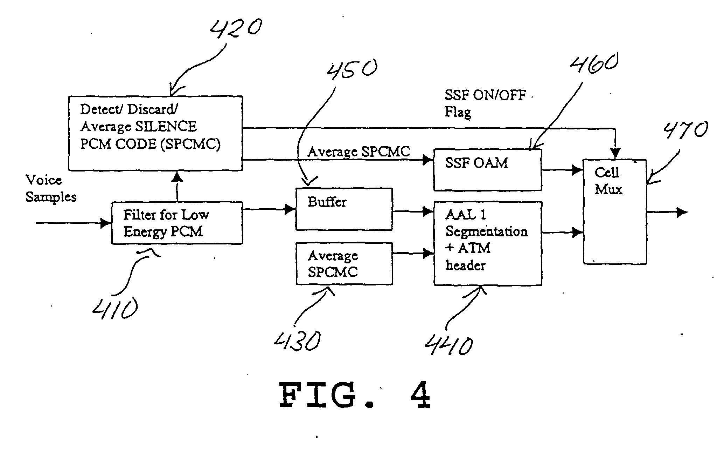

The arrangement at the ingress ATM access multiplexer for low energy suppression is shown in FIG. 4. In this example instead of suppressing just the PCM idle code, all low energy (read noise) PCM codes are suppressed and an average low energy PCM value is played out at the egress multiplexer access multiplexer. To achieve this, the filter 410 is expanded to look for all low energy PCM codes (for µ-law 255 PCM it would be all PCM codes with the SEGMENT bits set to zero for example). Then the SSF ON/OFF procedure is triggered based on the onset of detection of a code word belonging to the targeted set or a lack of detection. At the egress access multiplexer, either a fixed PCM code word is played out during the IDLE period or white noise is played out at a power level that is the average of all the suppressed segments and transmitted by the ingress in the OAM cell. The system can also be made more dynamic by maintaining a running average of the PCM codes for a given channel during its IDLE state and transmitting that instantaneous value in the OAM SSF ON message to the egress multiplexer node. The actual functioning of this scheme will be clear to a skilled artisan from FIG. 4.

### IV B. 3 Voice Suppression using AAL-2

In AAL-2, multiple subchannels are multiplexed on a given ATM VC. There are many proposals on the exact form of the AAL-2 adaptation layer some of which includes a variable number of channels that can be multiplexed onto a given channel. However, in all AAL-2 proposals the notion of a subchannel id, that is inherent in the multiplexing scheme, is included. To extend the technique of the present invention to AAL-2 transmission, the subchannel ID needs to be carried in the OAM message to allow demultiplexing at the egress multiplexer on a subchannel basis. The arrangement at the ingress ATM multiplexer is the same as in the previous example except that the AAL-1 engine is replaced with an AAL-2 engine and the buffering arrangement is on a per subchannel basis and not on a per VC basis. For example, if three voice channels are multiplexed on one ATM VC, the AAL-2 engine picks 15 bytes from each channel and adds a one byte AAL-2 overhead before moving to the next subchannel on a given VC. Note that the one byte AAL-2 overhead on each subchannel will carry a subchannel id that can be used in the SSF OAM cell.

### IV B. 4 HDLC Idle code detection.

For HDLC channels, idle code suppression can be provided by detecting HDLC flags and removing them. Similarly the present invention also allows keying in on Fax idle codes and removing them.

### IV C ROBUSTNESS ISSUES

The question of robustness arises in case SSF OAM cell gets lost. To determine the correct strategy, the ramification of losing cells needs to be understood. If the channel is in an ACTIVE state and the SSF ON OAM cell is lost, then the ramification is not much. After some time the buffer gets depleted and the IDLE CODE will be used to replay the stream in any case. However the channel may be IDLE State and the SSF OFF OAM cell may be lost. In such a case, the voice quality suffers with serious ramifications.

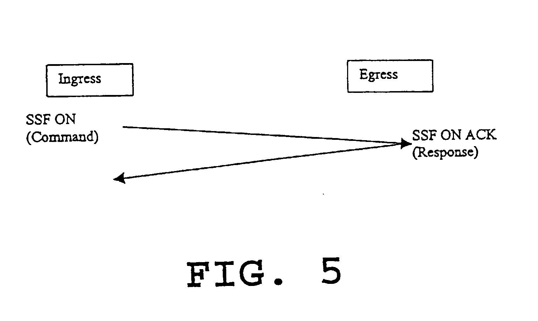

To counteract this problem, a soft state error recovery solution is used when the SSF OAM cells are sent periodically. The length of the period should be designed to handle the maximum length of time a voice call can be degraded. Another advantage of the softstate OAM cell strategy is that the average IDLE CODE PCM value to be played out can be dynamically changed in any given interval by sending the updated value every refresh interval. The other option is to provide a two-way CAM handshake protocol to guarantee that the OAM cell has been received. A typical sequence incorporating such a two-way handshake is shown in FIG.5.

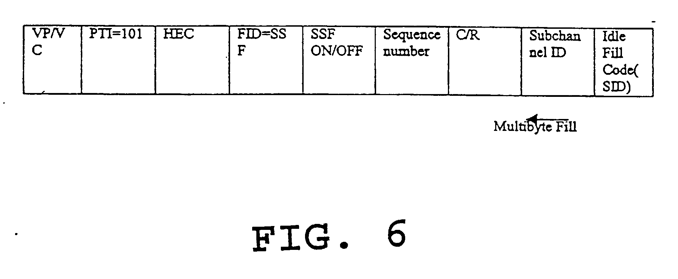

In this case the ingress multiplexer node maintains a timer and resends the SSF OAM cell if it does not receive a response in a certain time. Based on these considerations, the requirements on the OAM cell format is postulated. This is shown in FIG. 6.

Other modifications and variations to the invention will be apparent to those skilled in the art from the foregoing disclosure and teachings. Thus, while only certain embodiments of the invention have been specifically described herein, it will be apparent that numerous modifications may be made thereto without departing from the spirit and scope of the invention.

## Claims

1. A method of transmitting silence in an ATM network, wherein a specific silence representation model known to ingress multiplexer and egress multiplexer is used, said method comprising:
a) modeling silence at the ingress multiplexer;
b) describing silence based on model generated in step (a) using silence descriptors;
c) transmitting the silence descriptors using a medium;
d) receiving the silence descriptors at the egress multiplexer; and
e) recreating silence using the silence descriptors.

2. The method of claim 1, wherein a decision to suppress or not to suppress silence is based on streams with known encoding formats.

3. The method of claim 1 wherein OAM cells are used to transmit silence descriptors.

4. The method of claim 2 wherein said streams are selected from a group consisting of digital PCM, ADPCM, CELP, PLC and HDLC.

5. The method of claim 3 wherein the silence descriptors can be changed dynamically, wherein changes are conveyed to the egress multiplexer by dynamically refreshing the OAM cells.

6. A method of transmitting voice in an ATM network with silence suppression, said method comprising:
a) preparing a start notification and a corresponding end notification on detecting an epoch of silence in a speech sample;
b) converting speech samples without silence into ATM cells at an ingress multiplexer;
c) appending a 5-byte ATM header to the ATM cells;
d) sending the ATM cells, said start notifications and corresponding end notification prepared in step (a) at appropriate times; and
e) recreating the voice sample at an egress multiplexer based on the ATM cells, the start notification and corresponding end notification.

7. The method of claim 6 wherein the start notification and corresponding end notification are prepared using OAM cells.

8. The method of claim 6 wherein step (d) comprises:
(d) (i) setting a silence suppression flag of an OAM cell to ON to indicate silence;
(d)(ii) transmitting a last valid ATM cell by the ingress multiplexer before transmitting the OAM cell with silence suppression set to ON on a VC; and
(d)(iii) marking the VC as inactive.

9. The method of claim 6 wherein in step (a) all low energy PCM are designated as silence, in step (d) silence descriptors are transmitted representing silence, and in step (e) a function of the silence descriptors is played out.

10. The method of claim 6 wherein for an AAL-2 a subchannel ID is added to indicate a subchannel to facilitate demultiplexing at the egress multiplexer.

11. The method of claim 6 wherein in step (a) idle code suppression is provided by removing HDLC flags.

12. The method of claim 6 wherein in step (a) idle code suppression is provided by removing fax idle codes.

13. The method of claim 6 wherein error recovery is provided by sending OAM cells periodically.

14. The method of claim 6 wherein error recovery is provided by having a two-way OAM handshake protocol that guarantees that an OAM cell has been received.

15. The method of claim 7 wherein the OAM cell is an end to end OAM cell corresponding to payload type indicator of 101.

16. The method of claim 8 wherein on detecting a non idle flag, an OAM cell with a silence suppression flag set to OFF is transmitted followed by marking the VC as active.

17. An OAM cell for use in suppressing silence in an ATM network, said OAM cell comprising a silence suppression function.

18. The OAM cell of claim 17 wherein said OAM cell carries a sub-channel ID for an AAL-2 subchannel.

19. The OAM cell of claim 17 wherein the cell structure has a sequence number field for an AAL-1 subchannel, said sequence number being a last sent out SSCS-PDU, and wherein a receiver ensures that the SSCS-PDU is received in full and played out before silence is played when said silence is triggered by an OAM cell carrying the sequence number.

20. An ATM network with silence suppression wherein silence suppression is carried out at an ingress multiplexer by multiplexing silence start and silence end notifications at beginning and end of silence, wherein only voice data is converted into ATM cells and playing out silence and voice at appropriate instances at egress multiplexer.

21. The network of claim 20 wherein the notifications are done using an OAM cell.

22. The network of claim 20 wherein all low energy PCM is designated as silence.

23. The network of claim 20 wherein for an AAL-2 a subchannel ID in the SSF OAM format is added to indicate a subchannel to facilitate demultiplexing at the egress multiplexer.

24. The network of claim 20 wherein idle code suppression is provided by removing HDLC flags.

25. The network of claim 20 wherein idle code suppression is provided by removing fax idle codes.

26. The network of claim 20 wherein error recovery is provided by sending OAM cells periodically.

27. The network of claim 26 wherein error recovery is provided by having a two-way OAM handshake protocol that guarantees that an OAM cell has been received.

28. The network of claim 27 wherein the OAM cell is an end to end OAM cell corresponding to payload type indicator of 101.
